# EUROPEAN PATENT SPECIFICATION

(11) **EP 3 446 855 B1**
(45) Date of publication and mention of the grant of the patent: **24.11.2021**
(21) Application number: 17187997.6
(22) Date of filing: 25.08.2017
(51) Int. Cl.: B29C 64/153, B29C 64/135, B29C 64/393, B22F 10/20, B22F 10/30, B33Y 30/00, B33Y 50/02

(54) **APPARATUS FOR ADDITIVELY MANUFACTURING OF THREE-DIMENSIONAL OBJECTS**
VORRICHTUNG ZUR GENERATIVEN FERTIGUNG VON DREIDIMENSIONALEN OBJEKTEN
APPAREIL DE FABRICATION ADDITIVE D'OBJETS TRIDIMENSIONNELS

(43) Date of publication of application: 27.02.2019
(73) Proprietor: CL Schutzrechtsverwaltungs GmbH, 96215 Lichtenfels (DE)
(72) Inventor: Zeulner, Fabian, 96215 Lichtenfels (DE); Dicken, Christian, 95466 Weidenberg (DE); Hunze, Stephan, 01796 Pirna (DE)
(74) Representative: Hafner & Kohl PartmbB

(56) References cited:
- WO-A1-95/11100
- WO-A1-2006/105827
- WO-A1-2014/042360
- WO-A1-2015/062564
- WO-A1-2015/108560
- JP-A- H02 225 580
- US-A1- 2013 168 902
- US-A1- 2017 120 337

## Description

The invention relates to an apparatus for additively manufacturing of three-dimensional objects by means of successive layerwise selective irradiation and consolidation of layers of a build material which can be consolidated by means of an energy beam, with an irradiation device configured to generate the energy beam, wherein the energy beam propagates along an optical beam path onto a build plane, wherein the energy beam irradiates build material in at least one consolidation zone.

Such apparatuses are well-known from prior art, wherein an energy beam selectively irradiates layers of a build material, wherein the build material is consolidated by irradiation with the energy beam. The energy beam is generated via an irradiation device and guided onto a build plane along an optical beam path. In other words, the energy beam is selectively guided onto a surface of build material located in a build plane, wherein the parts of the surface of the build material the energy beam is guided on are irradiated and thereby, consolidated. By selectively irradiating several layers in succession the three-dimensional object is additively built. The path in the build plane the energy beam is guided along is referred to as energy beam path ("writing path"), whereas the optical beam path refers to the path the energy beam travels along from the irradiation device, in particular from a beam source of the irradiation device through optical elements, to the build plane. In other words, the energy beam path is the variation of the position of the energy beam in the build plane.

Further, it is known from prior art to detect the temperature in the consolidation zone to generate information relating to a quality of the manufacturing process, in particular whether the irradiated build material is properly consolidated. The process quality and/or structural parameters of the object built in the manufacturing process additionally depend on the temperature in zones adjacent to the consolidation zone. In particular, if a temperature gradient between the consolidation zone and adjacent zones exceeds a defined value, negative impacts on the quality of the built object can occur, e.g. cracks in the volume of the built object.

WO 95/11100 A1 discloses an apparatus for temperature-controlled laser sintering.

US 2013/168902 A1 discloses an additive manufacturing apparatus.

It is an object to provide an apparatus, wherein the manufacturing process is improved.

The object is inventively achieved by an apparatus according to claim 1 and a method according to claim 11.

Advantageous embodiments of the invention are subject to the dependent claims.

The invention is defined by the appended Claims.

The apparatus described herein is an apparatus for additively manufacturing three-dimensional objects, e.g. technical components, by means of successive layerwise selective irradiation and consolidation of layers of a powdered build material ("build material") which can be consolidated by means of an energy beam. A respective build material can be a metal, ceramic or polymer powder. A respective energy beam can be a laser beam or an electronic beam. A respective apparatus can be a selective laser sintering apparatus, a selective laser melting apparatus or a selective electron beam melting apparatus, for instance.

The apparatus comprises a number of functional units which are used during its operation. Exemplary functional units are a process chamber, an irradiation device which is configured to selectively irradiate a build material layer disposed in the process chamber with at least one energy beam, and a stream generating device which is configured to generate a gaseous fluid stream, e.g. a gas stream, at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc. The detection device may comprise a scanning unit that is configured to guide radiation emitted from the build plane to at least one sensor, in particular a camera, of the detection device.

The invention is based on the idea that a detection device is provided that is configured to detect radiation emitted from at least one adjacent zone that is located adjacent to the consolidation zone or to detect radiation emitted from the consolidation zone and radiation emitted from the adjacent zone. Thus, the apparatus allows for a detection of the radiation that is emitted from a zone adjacent to the consolidation zone so as to generate information relating to the effects of the manufacturing process on the build material adjacent to the build material in the consolidation zone. Thus, it is possible to generate information that is linked directly to the adjacent zone, whereas in prior art it is only possible to acquire information relating to the consolidation zone and to estimate the effect on the zones adjacent to the consolidation zone.

The zone in which the energy beam directly irradiates the build material is referred to as "consolidation zone" in the scope of this application. A zone adjacent to the consolidation zone ("adjacent zone") is in particular in thermal contact with the consolidation zone in that an irradiation of the consolidation zone with the energy beam increasing the temperature of the build material in the consolidation zone leads to an increase of the temperature in the adjacent zone due to the thermal contact. For example, the adjacent zone directly contacts or surrounds the consolidation zone. The term "emit" or "emission" in the scope of this application refers to the reflection of radiation at a surface as well as the generation and the release of radiation by an object or volume, for example a volume of build material, e.g. thermal radiation due to heating the object.

In particular, an optical beam path of the detected radiation, the detected radiation travels along is different from the energy beam path. The optical beam path of the detected radiation refers to the path the radiation travels along that is emitted from the build material in the build plane. In particular, the emitted radiation travels from the build plane to the detection device, e.g. an optical sensor of the detection device. The apparatus therefore, is designed in that, unlike in prior art, the radiation used to acquire the information, i.e. the detected radiation, is not reflected at or generated in the build plane and travels the same optical beam path as the energy beam used to irradiate the build material in reverse direction. Instead, the detection device is arranged in that the optical beam path of the detected radiation differs from the optical beam path of the energy beam. Thus, the detected radiation does not travel through the optical components of the irradiation device, e.g. optical components used to collimate and/or focus the energy beam onto the build plane. Such optical components of typical irradiation devices comprise filter units, e.g. antireflection coatings, that filter a wide range of the wavelength spectrum so as to predominantly allow radiation with the wavelength of the energy beam or close to the wavelength of the energy beam to pass. Detected radiation refers to radiation that has been emitted by the build plane, in particular thermal radiation and reflected radiation, and guided towards the detection device or detected via the detection device, respectively.

This implies filtering of a wide range of the wavelength spectrum in that information is lost in apparatuses in which the detected radiation travels the same optical beam path as the energy beam used to irradiate the build material. According to this embodiment of the apparatus, the detected radiation does not travel the same optical beam path as the energy beam allowing for optical components without or with other filter units (coatings) to be used that allow radiation of a wider wavelength spectrum to pass. Further, radiation can be detected without the need of the detection device interfering with the optical beam path of the energy beam.

According to an embodiment of the apparatus, the detection device is configured to detect a temperature of at least one consolidation zone and/or at least one adjacent zone and/or to determine a temperature gradient between at least one consolidation zone and at least one adjacent zone. Of course, dependent on the object to be built, multiple consolidation zones and multiple adjacent zones can be present. The detection device enables a detection of the temperature not only in the consolidation zone but additionally, in at least one adjacent zone. This enables the generation of information relating to the effects of the irradiation with the energy beam on build material in adjacent zones.

In particular, it is possible to directly detect the temperature of an adjacent zone and therefore, determine the temperature flux between the consolidation zone and the adjacent zone. The adjacent zone is thereby, heated due to the thermal contact with the consolidation zone that is directly irradiated with the energy beam. Based on the detected temperature of the adjacent zone and the temperature of the consolidation zone or for example, two adjacent zones, thermal strains and/or mechanical stress in the build material and in the object can be determined. Further, a tendency of the build material and/or the object to develop defects, e.g. cracks, can be estimated.

The detection of the temperature and/or the temperature gradient allows a user of the apparatus to adjust various parameters, in particular beam parameters such as the intensity and/or the power of the energy beam so as to avoid temperature gradients above a predefined value leading to stress in the build material.

The apparatus can further be improved by providing a control unit that is configured to adjust or set at least one process parameter dependent on the detected temperature and/or the determined temperature gradient. Thus, the control unit may set or adjust various process parameters based on the detected temperature and/or the determined temperature gradient. The control of the process parameter by the control unit allows for an at least semi-automated process control, wherein the respective process parameters may be automatically controlled by the control unit dependent on the detected temperature and/or the determined temperature gradient. The process parameters may be controlled in that the process quality is enhanced, in particular that negative impacts on the build material and/or the object are reduced or avoided.

Particularly, the control unit may be configured to control, in particular to reduce, the temperature in at least one consolidation zone and/or to control, in particular to increase, the temperature in at least one adjacent zone and/or to reduce the temperature gradient between at least one consolidation zone and at least one adjacent zone dependent on the detected temperature and/or the determined temperature gradient, in particular exceeding a predefined threshold value. Hence, it is possible to reduce mechanical stress or thermal strains in the object by directly controlling the temperature in the consolidation zone and directly or indirectly control the temperature of the at least one adjacent zone. Due to the thermal contact the adjacent zone can indirectly be heated by heating the consolidation zone. Besides, the adjacent zone can be heated via the energy beam or a respective temperature element, e.g. a radiant heater or a water heater. The respective temperature may be controlled directly dependent on the detected temperatures and/or the determined temperature gradients. For example, if the temperature gradient is below a defined threshold value, it is possible to increase the temperature of the consolidation zone. If the temperature gradient is above a defined threshold value, the control unit may reduce a specific process parameter, e.g. the intensity or the power of the energy beam, to reduce the temperature in the consolidation zone.

Further, it is possible to directly control the temperature in the adjacent zone or the adjacent zones, for example by a heating the adjacent zone with a heating element, for example a radiant heater or a fluid heater. Besides, the adjacent zone can also be heated via the energy beam. By heating the adjacent zone a current temperature gradient can be reduced, as the temperature of the adjacent zone is at least partially adapted to the temperature in the consolidation zone. Of course, every combination of increasing or reducing the temperature in the consolidation zone or various adjacent zones is possible. The control unit may control the respective temperature or temperature gradient, if the temperature gradient exceeds a predefined threshold value. The threshold value may be defined regarding at least one property of the build material, for example an evaporation temperature or a melting temperature or the thermal expansion of the build material.

According to another embodiment of the apparatus, the control unit is configured to control the temperature and/or the temperature gradient dependent on an ambient parameter and/or a path velocity of the energy beam and/or a condition of the build material. Therefore, the respective temperature and/or temperature gradient is controlled dependent on an ambient parameter, e.g. an ambient temperature in the process chamber and/or a property of a gas stream. Additionally or alternatively, it is possible to control the temperature and/or the temperature gradient dependent on the energy depleted in the build material, for example corresponding to a path velocity of the energy beam, as the duration the energy beam irradiates a volume of build material directly affects the energy that is depleted in the respective volume of build material. By moving the energy beam slower or faster over the build plane more or less energy may be depleted in the build material.

Further, the temperature and/or the temperature gradient may be controlled with respect to a condition of the build material. The condition of the build material may be detected with a suitable sensor in that a relation of the condition of the build material and the temperature or the temperature gradient the build material can tolerate is taken into account. The sensor may for example be configured to detect a humidity of the build material.

The apparatus can further be improved in that a data storage is provided that is configured to store at least one parameter, in particular a temperature and/or a temperature gradient. The storage of at least one parameter allows for a documentation and enhanced quality management of the manufacturing process. Thereby, a relation between the parameters present in the manufacturing process, for example a temperature of the consolidation zone and/or the temperature in adjacent zones, and properties of the built object is possible. In particular, specific properties or features of the object can be linked to the stored parameter that was present during the manufacturing of the object. Present mechanical properties or features of the object can therefore be traced back to the manufacturing process, wherein positive and negative impacts on the object can be documented, wherein the documentation can also be used for future manufacturing processes.

Further, a scanning unit is provided that is configured to guide the radiation that is emitted from the at least one consolidation zone and/or the at least one adjacent zone to the detection device. The scanning unit therefore, basically functions like a beam deflection unit of the irradiation device in that radiation emitted from a source, e.g. build material in the build plane, is guided to a defined position, i.e. a defined plane, for example a sensor surface of a sensor of the detection device. The scanning unit allows for an imaging of the consolidation zone and/or at least one adjacent zone onto the sensor, wherein, of course, the position of the consolidation zone varies with the current position of the energy beam on the build plane. Thus, it is possible to follow the position of the energy beam traveling the energy beam path in the build plane and to image the consolidation zone and/or the at least one adjacent zone onto a sensor of the detection device. As the scanning unit is configured to guide emitted radiation to the detection device it is possible to monitor radiation that is emitted from an arbitrary position of the build plane.

It is also possible to detect radiation that is emitted from a defined position relative to the consolidation zone, e.g. a zone with a defined distance to a current position of the energy beam in the build plane. As the energy beam travels over the build plane along the energy beam path, the radiation emitted from the defined position is being guided to the detection device.

In particular, the scanning unit may be synchronized with the irradiation device, in particular with at least one beam deflection unit of the irradiation device configured to guide the energy beam over the build plane, in that the at least one consolidation zone and/or the at least one adjacent zone is imaged onto a measuring unit of the detection device. The synchronization of the scanning unit with the irradiation device or particularly, the beam deflection unit, allows for a synchronized monitoring of the consolidation zone as the current position of the energy beam on the build plane can be imaged to the detection device via the scanning unit. A variation in the position of the energy beam on the build plane leads to an update of the position that is monitored via the detection device. Hence, an "online-" monitoring is enabled.

The detection device may comprise at least one optical element configured to image the at least one consolidation zone and/or the at least one adjacent zone onto the measuring unit, wherein the optical element is an apochromat. The use of an apochromat is advantageous, as the focal length only slightly varies when the wavelength of the radiation through the optical element is changed. Imaging errors can therefore be reduced.

According to another embodiment of the apparatus, the measuring unit comprises at least one pyrometer camera, in particular a ratio pyrometer camera. The use of a pyrometer camera allows for a local resolution of the temperature of at least one zone on the build plane. Further, the detection of the temperature of at least one consolidation zone and/or one adjacent zone may be performed time resolved. Thus, the detection of local varying temperatures and therefore, temperature gradients is possible. Hence, the temperatures and temperature gradients may be detected / determined locally and timely resolved. This leads to an improved detection or determination of possible thermal strains or mechanical stress in the object.

Further, the apparatus can be improved by providing a protective glass that is arranged between the build plane and the detection device, wherein a transmittance spectrum of the protective glass ranges from 170 nm to 5000 nm, preferably from 400 nm to 2000 nm. The protective glass used is unlike in prior art configured to let pass radiation from a wide wavelength spectrum. This enables the analysis of adjacent zones, in particular zones imaging radiation that differs from the radiation of the energy beam. The arrangement of the detection device as described above together with the use of the protective glass is advantageous, since a regular irradiation device can be used. Further, no changes in an existing irradiation device have to be made, wherein in particular a change of optical components of the irradiation device can be omitted, so that optically effective surfaces of every component of the irradiation device can be anti-reflection coated as usual. This allows for an efficient set up requiring low effort.

Additionally, the invention relates to a method as defined by claim 11.

Of course, all advantages, features and details described with respect to the apparatus are fully transferable to the method. In particular, the method may be performed on an apparatus as described above.

According to an embodiment, the method comprises the following steps:
- Detection of radiation that is emitted from at least one consolidation zone that is directly irradiated by the energy beam and at least one adjacent zone that is not directly irradiated by the energy beam
- Detection of a temperature of the at least one consolidation zone and/or at least one adjacent zone and/or determination of a temperature gradient between at least one consolidation zone and/or at least one adjacent zone
- Control of at least one process parameter dependent on the detected temperature and/or the determined temperature gradient.

The method according to this embodiment allows for the detection of radiation from the consolidation zone as well as from an adjacent zone. The radiation in the consolidation zone comprises thermal radiation due to heating the build material and radiation of the energy beam that is reflected on the metallic surface of build material that has been consolidated in the consolidation zone. Due to the thermal contact of the adjacent zone with the consolidation zone the build material in the adjacent zone is heated as well, wherein radiation emitted from the adjacent zone is mainly thermal radiation that can be detected.

By detecting the radiation from the consolidation zone and/or the adjacent zone the temperatures of the various zones are detected and a temperature gradient can be determined. Based on the temperature gradient it is possible to estimate whether negative impacts on the object are present, in particular whether thermal strain or mechanical stress in the object may be present. Dependent on the determined temperature gradient and/or the detected temperature at least one process parameter can be controlled to avoid inducing mechanical stress or thermal strain in the object.

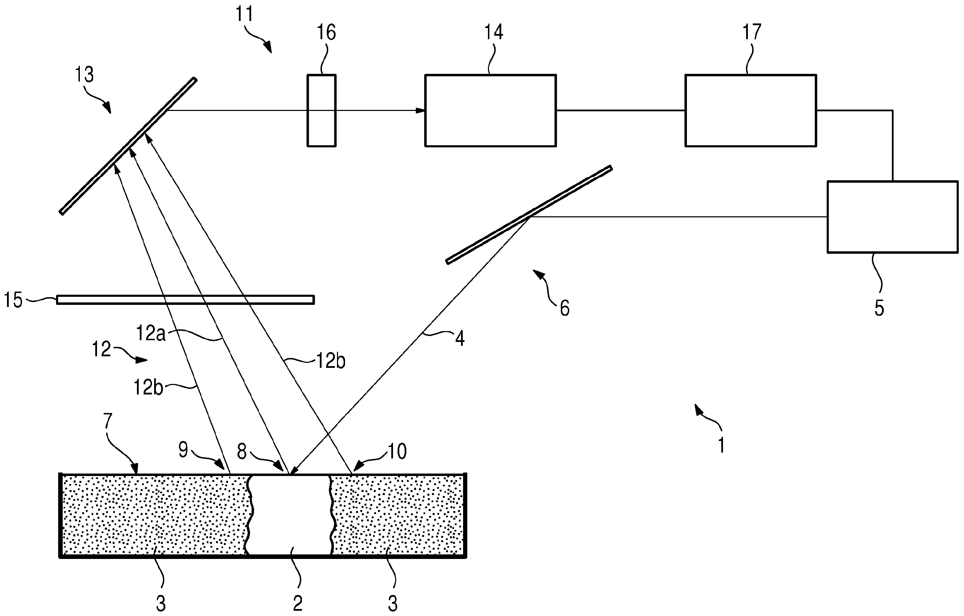

An exemplary embodiment of the invention is described with reference to the Fig. The sole Fig. is a schematic diagram and shows an apparatus according to an embodiment of the present invention.

The Fig. shows an apparatus 1 for additively manufacturing of three-dimensional objects 2 by means of successive layerwise selective irradiation and consolidation of layers of a build material 3 which can be consolidated by means of an energy beam 4, with an irradiation device 5 configured to generate the energy beam 4, wherein the energy beam 4 propagates along an optical beam path 6 of the energy beam 4 onto a build plane 7. The energy beam 4 irradiates build material 3 in multiple consolidation zones 8. Therefore, build material 3 in a consolidation zone 8 is irradiated by the energy beam 4 and thereby consolidated.

The Fig. further shows adjacent zones 9, 10 adjacent to the consolidation zone 8, wherein the adjacent zones 9, 10 are in thermal contact with the consolidation zone 8 in that thermal energy deposited in the consolidation zone 8 also heats the adjacent zones 9, 10.

The apparatus 1 comprises a detection device 11 that is configured to detect radiation 12a, 12b emitted from the adjacent zones 9, 10 and the consolidation zone 8 traveling an optical beam path 12 of the emitted radiation 12a, 12b. In the Fig. radiation 12a that is emitted from the consolidation zone 8 is indicated with the reference sign 12a and radiation 12b emitted from one of the adjacent zones 9, 10 is indicated with reference sign 12b. In other words, the detection device 11 detects the entire radiation 12a, 12b that is emitted from the build plane 7 such as radiation 12b of the energy beam 4 that is reflected at the surface of the build plane 7 as well as thermal radiation 12a, 12b emitted due to heating of the build material 3 in the consolidation zone 8 and the adjacent zones 9, 10.

The detection device 11 comprises a scanning unit 13 configured to guide radiation 12a, 12b emitted from the build plane 7 to a measuring unit 14 comprising an optical sensor, for example a CMOS or CCD sensor. In particular, the measuring unit 14 may be built as or comprise a pyrometer camera configured to provide suitable local resolution to detect the temperature of the single zones 8 to 10. Radiation 12a emitted from the consolidation zone 8 and radiation 12b emitted from the adjacent zones 9, 10 is transmitted through a protective glass 15 that is transparent in a wavelength spectrum e.g. of 400 nm to 2000 nm. Thus, nearly the entire radiation 12a, 12b emitted from the build plane 7 and traveling along the optical beam path 12 of the emitted radiation 12a, 12b can pass the protective glass 15.

The scanning unit 13 guides the radiation 12a, 12b to the measuring unit 14, wherein the radiation 12a, 12b passes through an optical element 16 that is built as an apochromat.

Hence, the detection device 11 is configured to detect radiation 12a, 12b and thereby detect the temperature of the consolidation zone 8 and the adjacent zones 9, 10. By detecting the temperature it is possible to determine a temperature gradient between the adjacent zone 9 and the consolidation zone 8 and between the consolidation zone 8 and the adjacent zone 10. Further, respective information can be generated dependent on the detected temperatures and the determined temperature gradients relating to properties of the object 2.

The apparatus 1 further comprises a control unit 17 that is configured to control various process parameters, for example beam parameters such as a power and/or an intensity of the energy beam 4. Thus, the control unit 17 may control the irradiation device 5, for example the beam velocity of the energy beam 4, e.g. the velocity of the variation of the position of the energy beam 4 in the build plane 7 traveling along the energy beam path.

As can be derived from the Fig. an optical beam path 12 of the radiation 12a, 12b emitted from the build plane 7 differs from the optical beam path 6 of the energy beam 4. Thus, the irradiation device 5 does not have to be changed in terms of the transmission spectrum of single optical components (not shown) of the irradiation device 5. Instead, the detection device 11 can be used that allows for an analysis or a detection of the radiation 12a, 12b without or with reduced loss of information due to a wide transmittance spectrum of the protective glass 15 and the other components used in the detection device 11.

The control unit 17 further is configured to control the temperature and the temperature gradient in or between the respective zones 8 to 10. In particular, if a defined threshold of the temperature gradient is exceeded, the control unit 17 may control the respective process parameter, in particular an energy beam power or an energy beam intensity of the energy beam 4 to avoid negative impacts on the object 2 such as mechanical stress or thermal strain that may lead to cracks in the object 2.

Further, the apparatus 1 can comprise a heating element (not shown), e.g. a water heater located below the build plane 7 or a radiant heater, configured to heat the adjacent zones 9, 10 to reduce a temperature gradient between the adjacent zones 9, 10 and the consolidation zone 8 by heating the adjacent zones 9, 10. The method described above may be performed on the apparatus 1 depicted in the Fig.

## Claims

1. Apparatus (1) for additively manufacturing of three-dimensional objects (2) by means of successive layerwise selective irradiation and consolidation of layers of a build material (3), the apparatus comprising:
an irradiation device (5) configured to generate an energy beam (4) to irradiate and thereby consolidate layers of the build material (3) in at least one consolidation zone (8), the irradiation device (5) comprising at least one beam deflection unit configured to guide the energy beam (4) along an optical beam path (6) of the energy beam (4) from the at least one beam deflection unit onto a build plane (7); and
a detection device (11) configured to detect radiation (12b) emitted from at least one adjacent zone (9, 10) adjacent to the consolidation zone (8), or to detect radiation (12a) emitted from the consolidation zone (8) and radiation (12b) emitted from the adjacent zone (9, 10);
**characterized by** a scanning unit (13) configured to deflect to the detection device (11) the radiation (12a, 12b) that is emitted from the at least one consolidation zone (8) and/or the at least one adjacent zone (9, 10), wherein the radiation (12a, 12b) travels an optical beam path (12) from the build plane to the scanning unit (13) that differs from the optical beam path (6) of the energy beam (4) from the at least one beam deflection unit onto the build plane (7).

2. Apparatus according to claim 1, **characterized in that** the detection device (11) is configured to detect a temperature of at least one consolidation zone (8) and/or at least one adjacent zone (9, 10) and/or to determine a temperature gradient between at least one consolidation zone (8) and at least one adjacent zone (9, 10).

3. Apparatus according to claim 2, **characterized by** a control unit (17) configured to adjust or set at least one process parameter dependent on the detected temperature and/or the determined temperature gradient.

4. Apparatus according to claim 3, **characterized in that** the control unit (17) is configured to control, in particular to reduce, the temperature in at least one consolidation zone (8) and/or to control, in particular to increase, the temperature in at least one adjacent zone (9, 10) and/or to reduce the temperature gradient between at least one consolidation zone (8) and at least one adjacent zone (9, 10) dependent on the detected temperature and/or the determined temperature gradient, in particular exceeding a predefined threshold value.

5. Apparatus according to claim 3 or 4, **characterized in that** the control unit (17) is configured to control the temperature and/or the temperature gradient dependent on an ambient parameter and/or a path velocity of the energy beam (4) and/or a condition of the build material (3).

6. Apparatus according to one of the preceding claims, **characterized by** a data storage configured to store at least one parameter, in particular a temperature and/or a temperature gradient.

7. Apparatus according to one of the preceding claims, **characterized in that** the scanning unit (13) is synchronized with the irradiation device (5), in particular with at least one beam deflection unit of the irradiation device (5) configured to guide the energy beam (4) over the build plane (7), **in that** the at least one consolidation zone (8) and/or the at least one adjacent zone (9, 10) is imaged onto a measuring unit (14) of the detection device (11).

8. Apparatus according to claim 7, **characterized in that** the detection device (11) comprises at least one optical element (16), in particular an apochromat, configured to image the at least one consolidation zone (8) and/or the at least one adjacent zone (9, 10) onto the measuring unit.

9. Apparatus according to claim 7 or 8 , **characterized in that** the measuring unit (14) comprises at least one camera, preferably a pyrometer camera, in particular a ratio pyrometer camera.

10. Apparatus according to one of the preceding claims, **characterized by** a protective glass (15) arranged between the build plane (7) and the detection device (11), wherein a transmittance spectrum of the protective glass (15) ranges from 170 nm to 5000 nm, preferably from 400 nm - 2000 nm.

11. Method for operating the apparatus according to one of the preceding claims, for additively manufacturing three-dimensional objects (2) by means of successive layerwise selective irradiation and consolidation of layers of a build material (3) which can be consolidated by means of an energy beam (4), wherein the energy beam (4) propagates along an energy beam (4) path from at least one beam deflection unit onto a build plane (7), wherein the energy beam (4) irradiates build material (3) in at least one consolidation zone (8), **characterized in that** radiation (12b) emitted from at least one adjacent zone (9, 10) adjacent to the consolidation zone (8), or radiation (12a) emitted from the consolidation zone (8) and radiation (12b) emitted from the adjacent zone (9, 10) travels an optical beam path (12) from the build plane (7) to a scanning unit (13), the optical beam path (12) of the radiation (12a, 12b) being different from the optical beam path (6) of the energy beam (4) from the at least one beam deflection unit onto the build plane (7), the scanning unit (13) deflecting the radiation (12a, 12b) to a detection device (11), and the detection device (11) detecting the radiation (12a, 12b).

12. Method according to claim 11, **characterized by** the following steps:
detecting with the detection device (11), radiation (12) that is emitted from at least one consolidation zone (8) that is directly irradiated by the energy beam (4) and at least one adjacent zone (9, 10) that is not directly irradiated by the energy beam (4);
detecting with the detection device (11), a temperature of the at least one consolidation zone (8) and/or at least one adjacent zone (9, 10) and/or determination of a temperature gradient between at least one consolidation zone (8) and/or at least one adjacent zone (9, 10); and
controlling at least one process parameter dependent on the detected temperature and/or the determined temperature gradient.

## Patentansprüche

1. Vorrichtung (1) zur additiven Herstellung von dreidimensionalen Objekten (2) durch aufeinanderfolgende schichtweise selektive Bestrahlung und Verfestigung von Schichten eines Aufbaumaterials (3), wobei die Vorrichtung umfasst:
eine Bestrahlungsvorrichtung (5), die konfiguriert ist, einen Energiestrahl (4) zu erzeugen, um Schichten des Aufbaumaterials (3) in mindestens einer Verfestigungszone (8) zu bestrahlen und dadurch zu verfestigen, wobei die Bestrahlungsvorrichtung (5) mindestens eine Strahlablenkungseinheit umfasst, die konfiguriert ist, den Energiestrahl (4) entlang eines optischen Strahlengangs (6) des Energiestrahls (4) von der mindestens einen Strahlablenkungseinheit auf eine Aufbauebene (7) zu leiten; und
eine Detektionsvorrichtung (11), die konfiguriert ist, Strahlung (l 2b) zu detektieren, die von mindestens einer an die Konsolidierungszone (8) angrenzenden Zone (9, 10) emittiert wird, oder Strahlung (12a) zu detektieren, die von der Konsolidierungszone (8) emittiert wird, und Strahlung (12b), die von der angrenzenden Zone (9, 10) emittiert wird;
**gekennzeichnet durch** eine Abtasteinheit (13), die konfiguriert ist, die Strahlung (12a, 12b), die von der mindestens einen Konsolidierungszone (8) und/oder der mindestens einen Konsolidierungszone (9) emittiert wird, zu der Detektionsvorrichtung (11) abzulenken.
mindestens einer benachbarten Zone (9, 10), wobei die Strahlung (12a, 12b) einen optischen Strahlengang (12) von der Bauebene zur Abtasteinheit (13) durchläuft, der sich von dem optischen Strahlengang (6) des Energiestrahls (4) von der mindestens einen Strahlablenkeinheit auf die Bauebene (7) unterscheidet.

2. Vorrichtung nach Anspruch 1, **dadurch gekennzeichnet, dass** die Erfassungseinrichtung (11) ausgebildet ist, eine Temperatur mindestens einer Konsolidierungszone (8) und/oder mindestens einer benachbarten Zone (9, 10) zu erfassen und/oder einen Temperaturgradienten zwischen mindestens einer Konsolidierungszone (8) und mindestens einer benachbarten Zone (9, 10) zu ermitteln.

3. Vorrichtung nach Anspruch 2, **gekennzeichnet durch** eine Steuereinheit (17), die konfiguriert ist, mindestens einen Prozessparameter in Abhängigkeit von der erfassten Temperatur und/oder dem ermittelten Temperaturgradienten anzupassen oder einzustellen.

4. Vorrichtung nach Anspruch 3, **dadurch gekennzeichnet, dass** die Steuereinheit (17) ausgebildet ist, um in Abhängigkeit von der erfassten Temperatur und/oder dem ermittelten Temperaturgradienten, insbesondere bei Überschreiten eines vordefinierten Schwellenwertes, die Temperatur in mindestens einer Konsolidierungszone (8) zu steuern, insbesondere abzusenken, und/oder die Temperatur in mindestens einer benachbarten Zone (9, 10) zu steuern, insbesondere zu erhöhen, und/oder den Temperaturgradienten zwischen mindestens einer Konsolidierungszone (8) und mindestens einer benachbarten Zone (9, 10) zu verringern.

5. Vorrichtung nach Anspruch 3 oder 4, **dadurch gekennzeichnet, dass** die Steuereinheit (17) so konfiguriert ist, dass sie die Temperatur und/oder den Temperaturgradienten in Abhängigkeit von einem Umgebungsparameter und/oder einer Bahngeschwindigkeit des Energiestrahls (4) und/oder einem Zustand des Aufbaumaterials (3) steuert.

6. Vorrichtung nach einem der vorhergehenden Ansprüche, **gekennzeichnet durch** einen Datenspeicher, der zum Speichern mindestens eines Parameters, insbesondere einer Temperatur und/oder eines Temperaturgradienten, ausgebildet ist.

7. Vorrichtung nach einem der vorhergehenden Ansprüche, **dadurch gekennzeichnet, dass** die Abtasteinheit (13) mit der Bestrahlungsvorrichtung(5), insbesondere mit mindestens einer Strahlumlenkeinheit der Bestrahlungsvorrichtung(5), die zum Führen des Energiestrahls (4) über die Aufbauebene (7) ausgebildet ist, synchronisiert ist, indem die mindestens eine Konsolidierungszone (8) und/oder die mindestens eine benachbarte Zone (9, 10) auf eine Messeinheit (14) der Detektionsvorrichtung (11) abgebildet wird.

8. Vorrichtung nach Anspruch 7, **dadurch gekennzeichnet, dass** die Detektionsvorrichtung (11) mindestens ein optisches Element (16), insbesondere einen Apochromaten, umfasst, das zur Abbildung der mindestens einen Konsolidierungszone (8) und/oder der mindestens einen benachbarten Zone (9, 10) auf die Messeinheit ausgebildet ist.

9. Vorrichtung nach Anspruch 7 oder 8, **dadurch gekennzeichnet, dass** die Messeinheit (14) mindestens eine Kamera, vorzugsweise eine Pyrometerkamera, insbesondere eine Quotientenpyrometerkamera, umfasst.

10. Vorrichtung nach einem der vorhergehenden Ansprüche, **gekennzeichnet durch** ein Schutzglas(15), das zwischen der Bauebene (7) und der Detektionsvorrichtung (11) angeordnet ist, wobei das Transmissionsspektrum des Schutzglases (15) im Bereich von 170 nm bis 5000 nm, vorzugsweise von 400 nm bis 2000 nm, liegt.

11. Verfahren zum Betreiben der Vorrichtung nach einem der vorhergehenden Ansprüche, zur additiven Herstellung von dreidimensionalen Objekten (2) mittels sukzessiver schichtweiser selektiver Bestrahlung und Verfestigung von Schichten eines mittels eines Energiestrahls (4) verfestigbaren Aufbaumaterials (3), wobei sich der Energiestrahl (4) entlang eines Energiestrahls (4) von mindestens einer Strahlablenkungseinheit auf eine Bauebene (7), wobei der Energiestrahl (4) Aufbaumaterial (3) in mindestens einer Konsolidierungszone (8) bestrahlt, **dadurch gekennzeichnet, dass** Strahlung (12b), die von mindestens einer an die Konsolidierungszone (8) benachbarten Zone (9, 10) emittiert wird, oder Strahlung (12a), die von der Konsolidierungszone (8) emittiert wird, und Strahlung (12b), die von der benachbarten Zone (9, 10) emittiert wird, einen optischen Strahlengang (12) von der Aufbauebene (7) zu einer Abtasteinheit (13) durchläuft, der optische Strahlengang (12) der Strahlung (12a, 12b) sich von dem optischen Strahlengang (6) des Energiestrahls (4) von der mindestens einen Strahlablenkungseinheit auf die Aufbauebene (7) unterscheidet, wobei die Abtasteinheit (13) die Strahlung (12a, 12b) zu einer Detektionsvorrichtung (11) ablenkt und die Detektionsvorrichtung (11) die Strahlung (12a, 12b) detektiert.

12. Verfahren nach Anspruch 11, **gekennzeichnet durch** die folgenden Schritte:
Erfassen von Strahlung (12) mit der Erfassungsvorrichtung (11), die von mindestens einer Konsolidierungszone (8), die direkt von dem Energiestrahl (4) bestrahlt wird, und mindestens einer benachbarten Zone (9, 10), die nicht direkt von dem Energiestrahl (4) bestrahlt wird, ausgesandt wird;
Erfassen einer Temperatur der mindestens einen Konsolidierungszone (8) und/oder mindestens einer benachbarten Zone (9, 10) und/oder Bestimmen eines Temperaturgradienten zwischen mindestens einer Konsolidierungszone (8) und/oder mindestens einer benachbarten Zone (9, 10) mit der Erfassungseinrichtung (11); und
Steuerung mindestens eines Prozessparameters in Abhängigkeit von der erfassten Temperatur und/oder dem ermittelten Temperaturgradienten.

## Revendications

1. Appareil (1) pour la fabrication additive d'objets tridimensionnels (2) au moyen d'une irradiation sélective par couches successives et d'une consolidation des couches d'un matériau de construction (3), l'appareil comprenant :
un dispositif d'irradiation (5) configuré pour générer un faisceau d'énergie (4) pour irradier et ainsi consolider des couches du matériau de construction (3) dans au moins une zone de consolidation (8), le dispositif d'irradiation (5) comprenant au moins une unité de déviation de faisceau configurée pour guider le faisceau d'énergie (4) le long d'un chemin de faisceau optique (6) du faisceau d'énergie (4) depuis la au moins une unité de déviation de faisceau sur un plan de construction (7) ; et
un dispositif de détection (11) configuré pour détecter un rayonnement (l 2b) émis depuis au moins une zone adjacente (9, 10) adjacente à la zone de consolidation (8), ou pour détecter un rayonnement (12a) émis depuis la zone de consolidation (8) et un rayonnement (12b) émis depuis la zone adjacente (9, 1O) ;
**caractérisé par** une unité de balayage (13) configurée pour dévier vers le dispositif de détection (11) le rayonnement (12a, 12b) qui est émis par la au moins une zone de consolidation (8) et/ou la au moins une zone de consolidation (10).
au moins une zone adjacente (9, 10), dans lequel le rayonnement (12a, 12b) parcourt un trajet de faisceau optique (12) depuis le plan de construction jusqu'à l'unité de balayage (13) qui diffère du trajet de faisceau optique (6) du faisceau d'énergie (4) depuis la au moins une unité de déviation de faisceau sur le plan de construction (7).

2. Appareil selon la revendication 1, **caractérisé en ce que** le dispositif de détection (11) est configuré pour détecter une température d'au moins une zone de consolidation (8) et/ou d'au moins une zone adjacente (9, 10) et/ou pour déterminer un gradient de température entre au moins une zone de consolidation (8) et au moins une zone adjacente (9, 10).

3. Appareil selon la revendication 2, **caractérisé par** une unité de commande (17) configurée pour ajuster ou régler au moins un paramètre du processus en fonction de la température détectée et/ou du gradient de température déterminé.

4. Appareil selon la revendication 3, **caractérisé en ce que** l'unité de commande (17) est configurée pour commander, en particulier pour réduire, la température dans au moins une zone de consolidation (8) et/ou pour commander, en particulier pour augmenter, la température dans au moins une zone adjacente (9, 10) et/ou pour réduire le gradient de température entre au moins une zone de consolidation (8) et au moins une zone adjacente (9, 10) en fonction de la température détectée et/ou du gradient de température déterminé, en particulier en dépassant une valeur seuil prédéfinie.

5. Appareil selon la revendication 3 ou 4, **caractérisé en ce que** l'unité de commande (17) est configurée pour commander la température et/ou le gradient de température en fonction d'un paramètre ambiant et/ou d'une vitesse de déplacement du faisceau d'énergie (4) et/ou d'un état du matériau de construction (3).

6. Appareil selon l'une des revendications précédentes, **caractérisé par** une mémoire de données configurée pour stocker au moins un paramètre, notamment une température et/ou un gradient de température.

7. Dispositif selon l'une des revendications précédentes, **caractérisé en ce que** l'unité de balayage (13) est synchronisée avec le dispositif d'irradiation (5), en particulier avec au moins une unité de déviation de faisceau du dispositif d'irradiation (5) configurée pour guider le faisceau d'énergie (4) sur le plan de construction (7), **en ce que** la au moins une zone de consolidation (8) et/ou la au moins une zone adjacente (9, 10) est représentée sur une unité de mesure (14) du dispositif de détection (11).

8. Appareil selon la revendication 7, **caractérisé en ce que** le dispositif de détection (11) comprend au moins un élément optique (16), notamment un apochromate, configuré pour former une image de la au moins une zone de consolidation (8) et/ou de la au moins une zone adjacente (9, 10) sur l'unité de mesure.

9. Appareil selon la revendication 7 ou 8, **caractérisé en ce que** l'unité de mesure (14) comprend au moins une caméra, de préférence une caméra pyrométrique, en particulier une caméra pyrométrique de rapport.

10. Appareil selon l'une des revendications précédentes, **caractérisé par** un verre protecteur (15) disposé entre le plan de construction (7) et le dispositif de détection (11), dans lequel un spectre de transmittance du verre de protection (15) est compris entre 170 nm et 5000 nm, de préférence entre 400 nm et 2000 nm.

11. Procédé pour faire fonctionner l'appareil selon l'une des revendications précédentes, pour la fabrication additive d'objets tridimensionnels (2) au moyen d'une irradiation et d'une consolidation sélectives par couches successives de couches d'un matériau de construction (3) qui peut être consolidé au moyen d'un faisceau d'énergie (4), dans lequel le faisceau d'énergie (4) se propage le long d'un faisceau d'énergie
(4) d'au moins une unité de déviation de faisceau sur un plan de construction (7), dans lequel le faisceau d'énergie
(4) irradie le matériau de construction (3) dans au moins une zone de consolidation (8), **caractérisé en ce que** le rayonnement (12b) émis par au moins une zone adjacente (9, 10) adjacente à la zone de consolidation (8), ou le rayonnement (12a) émis par la zone de consolidation (8) et le rayonnement (12b) émis par la zone adjacente (9, 10) parcourt un trajet de faisceau optique (12) du plan de construction (7) à une unité de balayage (13), le trajet de faisceau optique (12) du rayonnement (12a, 12b) étant différent du trajet de faisceau optique (6) du faisceau d'énergie (4) depuis la au moins une unité de déviation de faisceau sur le plan de construction (7), l'unité de balayage (13) déviant le rayonnement (12a, 12b) vers un dispositif de détection (11), et le dispositif de détection (11) détectant le rayonnement (12a, 12b).

12. Procédé selon la revendication 11, **caractérisé par** les étapes suivantes :
détecter, avec le dispositif de détection (11), un rayonnement (12) qui est émis par au moins une zone de consolidation (8) qui est directement irradiée par le faisceau d'énergie (4) et au moins une zone adjacente (9, 10) qui n'est pas directement irradiée par le faisceau d'énergie (4) ;
la détection, avec le dispositif de détection (11), d'une température de la au moins une zone de consolidation (8) et/ou d'au moins une zone adjacente (9, 10) et/ou la détermination d'un gradient de température entre la au moins une zone de consolidation (8) et/ou la au moins une zone adjacente (9, 1O) ; et
commander au moins un paramètre du processus en fonction de la température détectée et/ou du gradient de température déterminé.
